# EUROPEAN PATENT APPLICATION

(11) **EP 4 586 652 A1**
(43) Date of publication of application: **16.07.2025**
(21) Application number: 23905385.3
(22) Date of filing: 09.10.2023
(51) Int. Cl.: H04W 4/02

(54) **CALL PROCESSING METHOD, AND ELECTRONIC DEVICE AND COMPUTER-READABLE STORAGE MEDIUM**

(30) Priority: 21.12.2022 CN 202211679696
(71) Applicant: ZTE CORPORATION, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Canzler & Bergmeier Patentanwälte Partnerschaft mbB
(86) International application number: PCT/CN2023/123573
(87) International publication number: WO 2024/131212

(57) **Abstract**

Provided in the present application are a call processing method applied to a called terminal, a call processing method applied to a calling terminal, and an electronic device and a computer-readable storage medium. The call processing method applied to a called terminal comprises: receiving a call request of a calling terminal, and monitoring a position information access request, which is sent by the calling terminal; and upon monitoring the position information access request, which is sent by the calling terminal, acquiring position information of a called terminal, and sending the position information to the calling terminal.

## Description

### CROSS-REFERENCE TO RELATED APPLICATION

The present disclosure claims the priority of Chinese Patent Application No. 202211679696.6, filed on December 21, 2022, the contents of which are incorporated herein in their entirety by reference.

### TECHNICAL FIELD

Embodiments of the present disclosure relate to the field of video RBT (Ring Back Tone) technology, and in particular, to a call processing method, an electronic device, and a computer-readable storage medium.

### BACKGROUND

In recent years, with the rise of internet platforms such as Tiktok and Kwai, short videos with social attributes have become mainstream of network propagation. The video RBT service, which is first introduced by China Mobile, is a new species born under the circumstances and having both the advantages of operators and internet genes.

Major operators in China gradually release various innovative product applications such as calling RBT, high-definition RBT, hot-line RBT, AI scene RBT, and vibrant RBT. The innovative product applications fully satisfy the diversified expectations of different users such as individuals, government institutions, and enterprise units, and bring innovative, convenient and immersive product application and service experience to the users.

The video RBT service supports insertion of information such as audio, video, pictures, texts, position, and electronic business card. At present, the security of inserting position information into the video RBT is relativley low.

### SUMMARY

In a first aspect, an embodiment of the present disclosure provides a call processing method applied to a called terminal, including: receiving a call request of a calling terminal, and monitoring a position information access request sent by the calling terminal; and acquiring position information of the called terminal and sending the position information to the calling terminal, in response to the position information access request sent by the calling terminal being detected.

In a second aspect, an embodiment of the present disclosure provides a call processing method applied to a calling terminal, including: sending a call request to a called terminal, acquiring and playing a first video RBT without position information of the called terminal; sending a position information access request to the called terminal; and receiving the position information of the called terminal fed back by the called terminal, adding the position information of the called terminal into the first video RBT to form a second video RBT, and playing the second video RBT with the position information of the called terminal.

In a third aspect, an embodiment of the present disclosure provides an electronic device, including: at least one processor; and a memory storing at least one computer program which, when executed by the at least one processor, causes the at least one processor to implement the call processing method described above.

In a fourth aspect, an embodiment of the present disclosure provides a computer-readable storage medium, storing thereon a computer program which, when executed by a processor, causes the processor to implement the call processing method described above.

### BRIEF DESCRIPTION OF DRAWINGS

Fig. 1 is a flowchart of a call processing method applied to a called terminal in an embodiment of the present disclosure;
Fig. 2 is a flowchart of a call processing method applied to a calling terminal in an embodiment of the present disclosure;
Fig. 3 is a flowchart of a call processing method in an example of an embodiment of the present disclosure;
Fig. 4 is a flowchart of a call processing method in an example of an embodiment of the present disclosure;
Fig. 5 is a block diagram of an electronic device in an embodiment of the present disclosure; and
Fig. 6 is a block diagram of a call processing system in an embodiment of the present disclosure.

### DETAIL DESCRIPTION OF EMBODIMENTS

In order to make those skilled in the art better understand the technical solutions of the present disclosure, a call processing method, an electronic device, and a computer-readable storage medium provided by the present disclosure, are described in detail below with reference to the accompanying drawings.

Exemplary embodiments are described in detail below with reference to the accompanying drawings, but the described exemplary embodiments may be embodied in different forms, and the present disclosure should not be construed as limited to the embodiments set forth herein. The embodiments are illustrated to make the present disclosure more thorough and complete, and for those skilled in the art more fully understanding the scope of the present disclosure.

The embodiments of the present disclosure and the features in the embodiments may be combined with each other if no conflict is incurred.

As used herein, a term "and/or" includes any and all combinations of at least one of listed items.

The terms used herein are for a purpose of describing particular embodiments only, and are not intended to limit the present disclosure. As used herein, singular forms "a", "an" and "the" are intended to include plural forms as well (i.e., to represent at least one), unless the context clearly defines otherwise. It should further be understood that if terms "includes/comprises" and/or "made of/consisted of" are used in the present disclosure, they specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by those skilled in the art. It should further be understood that terms, such as those defined in common dictionaries, should be construed as having a meaning that is consistent with that in background of the existing art and the present disclosure, and should not be construed as having an idealized or over-formal meaning, unless expressly defined herein.

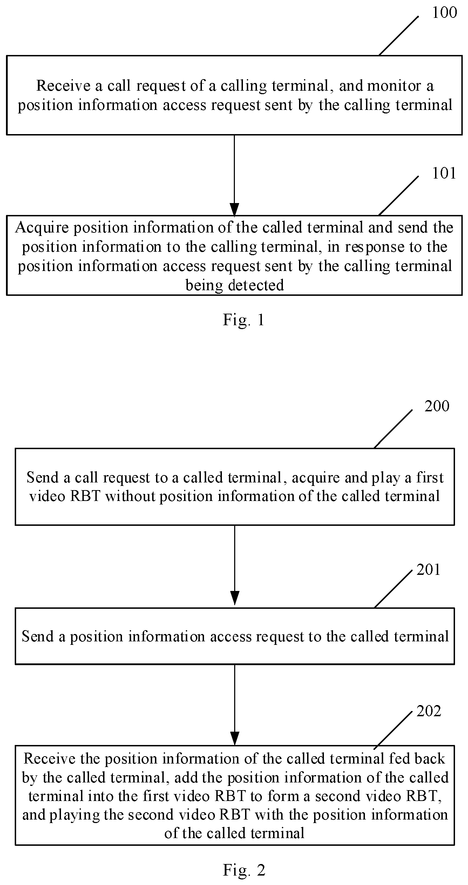

Fig. 1 is a flowchart of a call processing method applied to a called terminal in an embodiment of the present disclosure.

In a first aspect, with reference to Fig. 1, an embodiment of the present disclosure provides a call processing method applied to a called terminal, including following operations 100 and 101.

At operation 100, receiving a call request of a calling terminal, and monitoring a position information access request sent by the calling terminal.

In some implementations, the call request may be a Voice over New Radio (VoNR) call request.

In some implementations, after receiving the call request of the calling terminal, the position information access request sent by the calling terminal may be monitored in a state of the call request having not been accepted, or having been accepted.

At operation 101, acquiring position information of the called terminal and sending the position information to the calling terminal, in response to the position information access request sent by the calling terminal being detected.

In some implementations, the call processing method further includes: in response to the position information access request sent by the calling terminal being detected, determining an access permission of the calling terminal for the position information of the called terminal, before acquiring the position information of the called terminal; and in response to determining that the access permission of the calling terminal allows the calling terminal to access the position information of the called terminal, acquiring the position information of the called terminal.

In some implementations, in response to the position information access request sent by the calling terminal being not detected, the call processing flow is ended.

In some implementations, determining the access permission of the calling terminal for the position information of the called terminal, includes determining the access permission of the calling terminal for the position information of the called terminal based on at least one of the following information: a user group to which number information of the calling terminal belongs; an authentication result at a network side for the calling terminal; whether the calling terminal was granted with the access permission for accessing the position information during a historical call; and whether an instruction of granting the access permission for accessing the position information of the called terminal to the calling terminal is received.

In some implementations, the user group to which the number information of the calling terminal belongs may be determined based on whether the number information of the calling terminal is included in a preset permission white list having recorded a teminal allowed to access the position information of the called terminal.

In some implementations, the authentication result at the network side for the calling terminal includes at least one of: whether the calling terminal passes the authentication at the network side; whether the calling terminal is marked as a government agency at the network side.

In some implementations, the permission white list includes: number information of the terminal allowed to access position information of the called terminal.

In some implementations, the permission white list may be one list, or may be two or more lists. For example, the permission white list includes at least one of an emergency contact list, a family contact list, an emergency number list, or a safety contact list.

In some implementations, in response to the permission white list being one list and including the number information of the calling terminal, the user group corresponding to the number information of the calling terminal is a user group corresponding to the permission white list, that is, a user group including the number information in the permission white list.

In some implementations, in response to the permission white list including at least one of the emergency contact list, the family contact list, the emergency number list, or the safety contact list, the user group corresponding to the number information of the calling terminal is a user group corresponding to a list including the number information of the calling terminal, that is, a user group including the number information in the list which includes the number information of the calling terminal.

In some implementations, positioning a lost mobile terminal may be implemented based on the emergency contact list.

In some implementations, positioning a child's mobile terminal by a parent's mobile terminal may be implemented based on the family contact list.

In some implementations, positioning a user during a number such as 110 or 119 calls back may be implemented based on the emergency number list, so that the life and property safety of the user can be ensured in time.

In some implementations, the instruction of granting the access permission for accessing the position information of the called terminal to the calling terminal may be an instruction of granting the access permission for accessing the position information of the called terminal to only the calling terminal, or may be an instruction of granting the access permission for accessing the position information of the called terminal to all calling terminals.

In some implementations, determining the access permission of the calling terminal for the position information of the called terminal based on at least one of the above described information, includes: determining that the access permission of the calling terminal allows the calling terminal to access the position information of the called terminal, in response to at least one of following conditions being satisfied; or, determining that the access permission of the calling terminal does not allow the calling terminal to access the position information of the called terminal, in response to the following conditions being not satisfied: the user group to which the number information of the calling terminal belongs being the user group corresponding to the permission white list; the calling terminal having passed the authentication at the network side; the calling terminal having been marked as a government agency at the network side; the calling terminal having been granted with the access permission for accessing the position information during a historical call; the instruction of granting the access permission for accessing the position information of the called terminal to the calling terminal having been received.

To more clearly illustrate how to determine the access permission of the calling terminal for the position information of the called terminal, seven examples are listed below for description.

For example 1, the access permission of the calling terminal for the position information of the called terminal is determined based on a user group to which the number information of the calling terminal belongs. If the user group to which the number information of the calling terminal belongs is a user group corresponding to a permission white list, it is determined that the access permission of the calling terminal allows the calling terminal to access the position information of the called terminal; and if the user group to which the number information of the calling terminal belongs is not the user group corresponding to the permission white list, it is determined that the access permission of the calling terminal does not allow the calling terminal to access the position information of the called terminal.

For example 2, the access permission of the calling terminal for the position information of the called terminal is determined based on the user group to which the number information of the calling terminal belongs. If the user group to which the number information of the calling terminal belongs is a user group corresponding to an emergency contact list or a user group corresponding to a family contact list, it is determined that the access permission of the calling terminal allows the calling terminal to access the position information of the called terminal; and if the user group to which the number information of the calling terminal belongs is not the user group corresponding to the emergency contact list or the user group corresponding to the family contact list, it is determined that the access permission of the calling terminal does not allow the calling terminal to access the position information of the called terminal.

For example 3, the access permission of the calling terminal for the position information of the called terminal is determined based on the user group to which the number information of the calling terminal belongs. If the user group to which number information of the calling terminal belongs is a user group corresponding to at least one of an emergency contact list, a family contact list, an emergency number list, or a safety contact list, it is determined that the access permission of the calling terminal allows the calling terminal to access the position information of the called terminal; and if the user group to which the number information of the calling terminal belongs is not a user group corresponding to any one of the emergency contact list, the family contact list, the emergency number list, or the safety contact list, it is determined that the access permission of the calling terminal does not allow the calling terminal to access the position information of the called terminal.

In some implementations, if the user group to which the number information of the calling terminal belongs is not a user group corresponding to a safety contact list, a prompt message is displayed in a pop-up box to prompt the user whether to add the number information of the calling terminal into the safety contact list. If an instruction of adding the number information of the calling terminal into the safety contact list is received, the number information of the calling terminal is added into the safety contact list, whether the access permission of the calling terminal allows the calling terminal to access the position information of the called terminal is to be determined.

For example 4, the access permission of the calling terminal for the position information of the called terminal is determined based on the authentication result at the network side for the calling terminal. If the calling terminal passes the authentication at the network side, it is determined that the access permission of the calling terminal allows the calling terminal to access the position information of the called terminal; and if the calling terminal does not pass the authentication at the network side, it is determined that the access permission of the calling terminal does not allow the calling terminal to access the position information of the called terminal.

In some implementations, the call request may carry information representing whether the calling terminal passes the authentication at the network side, and whether the calling terminal passes the authentication at the network side is determined based on the information representing whether the calling terminal passes the authentication at the network side. If the call request carries information representing that the calling terminal passes the authentication at the network side, it is determined that the calling terminal passes the authentication at the network side; and if the call request carries information representing that the calling terminal does not pass the authentication at the network side, it is determined that the calling terminal does not pass the authentication at the network side.

In some implementations, the call request may carry information of the authentication at the network side for the calling terminal, and whether the calling terminal passes the authentication at the network side is determined based on the information of the authentication at the network side for the calling terminal. For example, the information of the authentication at the network side for the calling terminal may be information representing that the calling terminal is authenticated as any one of a general number, a government agency, an advertisement, a sales call, an intermediary, or the like. If the call request carries information representing that the calling terminal is authenticated as a general number or a government agency, it is determined that the calling terminal passes the authentication at the network side; and if the call request carries information representing that the calling terminal is authenticated as any one of an advertisement, a sales call, an intermediary, or the like, it is determined that the calling terminal does not pass the authentication at the network side.

In some implementations, the call request may further carry information of a user of the calling terminal, for example, information of a workplace of the user, number information of the user, or the like.

For example 5, the access permission of the calling terminal for the position information of the called terminal is determined based on the authentication result at the network side for the calling terminal. If the calling terminal is marked as a government agency at the network side, it is determined that the access permission of the calling terminal allows the calling terminal to access the position information of the called terminal; and if the calling terminal is not marked as a government agency at the network side, it is determined that the access permission of the calling terminal does not allow the calling terminal to access the position information of the called terminal.

In some implementations, the call request may carry information of the authentication at the network side for the calling terminal, and whether the calling terminal is marked as a government agency at the network side is determined based on the information of the authentication at the network side for the calling terminal. For example, the information of the authentication at the network side for the calling terminal may be information representing that the calling terminal is authenticated as any one of a general number, a government agency, an advertisement, a sales call, an intermediary, of the like. If the call request carries information representing that the calling terminal is authenticated as a government agency, it is determined that the calling terminal is marked as the government agency at the network side; and if the call request carries information representing that the calling terminal is authenticated as any one of a general number, an advertisement, a sales call, an intermediary, or the like, it is determined that the calling terminal is not marked as a government agency at the network side.

For example 6, the access permission of the calling terminal for the position information of the called terminal is determined based on whether the calling terminal was granted with the access permission for accessing the position information during a historical call. If the calling terminal was once granted with the access permission for accessing the position information during the historical call, it is determined that the access permission of the calling terminal allows the calling terminal to access the position information of the called terminal; and if the calling terminal was not granted with the access permission for accessing the position information during the historical call, it is determined that the access permission of the calling terminal does not allow the calling terminal to access the position information of the called terminal.

In some implementations, the historical call includes a last call.

In some implementations, the historical call includes previous N calls, N being an integer greater than or equal to 1.

For example, 7, the access permission of the calling terminal for the position information of the called terminal is determined based on whether an instruction of granting the access permission for accessing the position information of the called terminal to the calling terminal is received. If the instruction of granting the access permission for accessing the position information of the called terminal to the calling terminal is received, it is determined that the access permission of the calling terminal allows the calling terminal to access the position information of the called terminal; and if the instruction of granting the access permission for accessing the position information of the called terminal to the calling terminal is not received or an instruction of not granting the access permission for accessing the position information of the called terminal to the calling terminal is received, it is determined that the access permission of the calling terminal does not allow the calling terminal to access the position information of the called terminal.

In some implementations, the call processing method further includes: inquiring a user whether to grant the access permission for accessing the position information of the called terminal to the calling terminal, before determining whether an instruction of granting the access permission for accessing the position information of the called terminal to the calling terminal is received. For example, the user may be prompted with a pop-up box whether to grant the access permission for accessing the position information of the called terminal to the calling terminal.

In some implementations, the instruction of granting the access permission for accessing the position information of the called terminal to the calling terminal may include a permission level, and the permission level may be, for example, "always allowed", "allowed only this time", or the like.

The conditions for determining that the access permission of the calling terminal allows the calling terminal to access the position information of the called terminal in the above examples 1 to 7 may be combined with each other. In a case where the conditions are combined with each other, it may be determined that the access permission of the calling terminal allows the calling terminal to access the position information of the called terminal, if all the combined conditions are satisfied; or, it may be determined that the access permission of the calling terminal allows the calling terminal to access the position information of the called terminal, if part of the conditions in the combination are satisfied.

The conditions for determining that the access permission of the calling terminal does not allow the calling terminal to access the position information of the called terminal in the above examples 1 to 7 may be combined with each other. **In a** case where the conditions are combined with each other, it may be determined that the access permission of the calling terminal does not allow the calling terminal to access the position information of the called terminal, if at least one of the conditions for determining that the access permission of the calling terminal does not allow the calling terminal to access the position information of the called terminal is satisfied.

**In** some implementations, the call processing method further includes: if it is determined that the access permission of the calling terminal allows the calling terminal to access the position information of the called terminal, determining a position privacy policy corresponding to the calling terminal before acquiring the position information of the called terminal.

**In** some implementations, the position privacy policy includes at least one of position privacy precision and position information operation permission, and the position information operation permission is configured to restrict an operation of the calling terminal on the position information.

In some implementations, acquiring the position information of the called terminal includes: acquiring position information of the called terminal corresponding to the position privacy precision.

In some implementations, sending the position information to the calling terminal includes: sending the position information and the position information operation permission to the calling terminal, the position information operation permission being configured to restrict the operation of the calling terminal on the position information.

In some implementations, if the position information operation permission is read only, the position information operation permission is configured to restrict the calling terminal from performing other operations on the position information than adding the position information into the first video RBT, or to restrict the calling terminal from performing other operations on the position information than adding the position information onto a call display interface.

In some implementations, if the position information operation permission is destroy after reading, the position information operation permission is configured to allow the calling terminal to delete the position information in the second video RBT after adding the position information into the first video RBT for a preset time; or allow the calling terminal to delete the position information on the call display interface after adding the position information onto the call display interface for the preset time.

In some implementations, if the position information operation permission is destroy after reading, the position information operation permission is configured to allow the calling terminal to delete the position information in the second video RBT after the position information has been added into the first video RBT for a preset time, and restrict the calling terminal from performing other operations on the position information than adding the position information into the first video RBT; or allow the calling terminal to delete the position information on the call display interface after adding the position information onto the call display interface for the preset time, and restrict the calling terminal from performing other operations on the position information than adding the position information onto the call display interface.

In some implementations, the first video RBT refers to a video RBT to which the position information of the called terminal is not added, and the second video RBT refers to a video RBT to which the position information of the called terminal is added.

In some implementations, the other operations than adding the position information into the first video RBT include: saving, forwarding, copying, pasting, screen capturing, screen recording, and the like.

In some implementations, the other operations than adding the position information onto the call display interface include: saving, forwarding, copying, pasting, screen capturing, screen recording, and the like.

In some implementations, by restricting the operation of the calling terminal on the position information through the position information operation permission, the safety of the position information of the called terminal is further improved.

In some implementations, the position privacy precision includes at least one of high precision, normal precision, coarse precision, or virtual position precision.

In some implementations, the position information with the high precision refers to longitude and latitude information, with the hig precision, obtained and retained by a Real-Time Kinematic (RTK) differential positioning technology, for example, the longitude and latitude information reserving an A-th decimal place after the decimal point, A being determined based on a desired precision.

In some implementations, the position information with the normal precision refers to longitude and latitude information, with the normal precision, obtained and retained by a Global Positioning System (GPS) positioning technology, a Wireless Local Area Network (WLAN) positioning technology, a bluetooth positioning technology, or a base station positioning technology, for example, the longitude and latitude information reserving a B-th decimal place after the decimal point, B being determined based on a desired precision and less than A.

In some implementations, the position information with the coarse precision refers to the longitude and latitude information, with the coarse precision, extracted from the position information with the high precision or the normal precision, for example, the longitude and latitude information extracted till a C-th decimal place after the decimal point, C being determined based on a desired precision and less than B. For example, in order to obtain longitude and latitude information with a precision of a province level, the 2nd decimal place after the decimal point should be reserved for the longitude and latitude information; in order to obtain longitude and latitude information with a precision of a city level, the 3rd decimal place after the decimal point should be reserved for the longitude and latitude information; in order to be obtain longitude and latitude information with a precision of a district level, the 4th decimal place after the decimal point should be reserved for the longitude and latitude information; in order to obtain longitude and latitude information with a precision of a street level, the 5th decimal place after the decimal point should be reserved for the longitude and latitude information.

In some implementations, the position information with the virtual position precision refers to position information, which is set in advance or in real time and different from position information obtained by positioning.

In some implementations, determining the position privacy policy corresponding to the calling terminal includes determining the position privacy policy corresponding to the calling terminal based on at least one of the following information: a user group to which number information of the calling terminal belongs; an authentication result at a network side for the calling terminal; whether the calling terminal is granted with the access permission for accessign the position information during a historical call; whether an instruction of granting the access permission for accessing the position information of the called terminal to the calling terminal is received; whether a position of the called terminal belongs to a preset sensitive place; whether the called terminal is in a privacy mode; and timing at which the position information access request sent by the calling terminal is detected.

In some implementations, the user group to which the number information of the calling terminal belongs may be determined based on whether the number information of the calling terminal is included in a preset permission white list having recorded a terminal allowed to access the position information of the called terminal.

In some implementations, the authentication result at the network side for the calling terminal includes at least one of the following: whether the calling terminal passes the authentication at the network side; or whether the calling terminal is marked as a government agency at the network side.

In some implementations, the permission white list may be one list, or may be two or more lists. For example, the permission white list includes at least one of an emergency contact list, a family contact list, an emergency number list, or a safety contact list.

In some implementations, if the permission white list is one list and the permission white list includes the number information of the calling terminal, the user group corresponding to the number information of the calling terminal is a user group corresponding to the permission white list, that is, a user group including the number information in the permission white list.

In some implementations, if the permission white list includes at least one of an emergency contact list, a family contact list, an emergency number list, or a safety contact list, the user group corresponding to the number information of the calling terminal is a user group corresponding to a list including the number information of the calling terminal, that is, a user group including the number information in the list which includes the number information of the calling terminal.

To more clearly illustrate how to determine the position privacy policy corresponding to the calling terminal, nine examples are listed below for description.

For example 1, the position privacy policy corresponding to the calling terminal is determined based on a user group to which number information of the calling terminal belongs. If the user group to which number information of the calling terminal belongs is a user group corresponding to at least one of an emergency contact list, a family contact list, or an emergency number list, it is determined that the position privacy precision corresponding to the calling terminal is the high precision, and the position information operation permission corresponding to the calling terminal is read only; if the user group to which the number information of the calling terminal belongs is not a user group corresponding to any one of the emergency contact list, the family contact list, or the emergency number list, and the user group to which the number information of the calling terminal belongs is a user group corresponding to the safety contact list, it is determined that the position privacy precision corresponding to the calling terminal is the normal precision, and the position information operation permission corresponding to the calling terminal is destroy after reading.

For example 2, the position privacy policy corresponding to the calling terminal is determined based on the user group to which number information of the calling terminal belongs, and an authentication result at the network side for the calling terminal. If the calling terminal passes the authentication at the network side, the user group to which the number information of the calling terminal belongs is not a user group corresponding to any one of the emergency contact list, the family contact list, the emergency number list, or the safety contact list, and the calling terminal is not marked as a government agency at the network side, it is determined that the position privacy precision corresponding to the calling terminal is the normal precision, and the position information operation permission corresponding to the calling terminal is destroy after reading.

For example 3, the position privacy policy corresponding to the calling terminal is determined based on an authentication result at the network side for the calling terminal. If the calling terminal does not pass the authentication at the network side, it is determined that the position privacy precision corresponding to the calling terminal is the virtual position precision, and the position information operation permission corresponding to the calling terminal is destroy after reading.

For example 4, the position privacy policy corresponding to the calling terminal is determined based on an authentication result at the network side for the calling terminal. If the calling terminal is marked as a government agency at the network side, it is determined that the position privacy precision corresponding to the calling terminal is the high precision, and the position information operation permission corresponding to the calling terminal is read only.

For example 5, the position privacy policy corresponding to the calling terminal is determined based on whether the calling terminal was granted with the access permission for accessing the position information during a historical call. If the calling terminal was granted with the access permission for accessing the position information during the historical call, it is determined that the position privacy precision corresponding to the calling terminal is the high precision or the normal precision, and the position information operation permission corresponding to the calling terminal is destroy after reading.

For example 6, the position privacy policy corresponding to the calling terminal is determined based on whether an instruction of granting the access permission for accessing the position information of the called terminal to the calling terminal is received. If an instruction of granting the access permission for accessing the position information of the called terminal to the calling terminal is received, and the permission level in the instruction is allowed only this time, it is determined that the position privacy precision corresponding to the calling terminal is the coarse precision; and if an instruction of granting the access permission for accessing the position information of the called terminal to the calling terminal is received, and the permission level in the instruction is always allowed, it is determined that the position privacy precision corresponding to the calling terminal is the normal precision, and the position information operation permission corresponding to the calling terminal is destroy after reading.

For example 7, the position privacy policy corresponding to the calling terminal is determined based on whether a position of the called terminal belongs to a preset sensitive position. If the position of the called terminal is any sensitive place of a home address, a workplace address, a hospital address, or the like of the user of the called terminal, it is determined that the position privacy precision corresponding to the calling terminal is the coarse precision, and the position information operation permission corresponding to the calling terminal is destroy after reading.

For example 8, the position privacy policy corresponding to the calling terminal is determined based on whether the called terminal is in a privacy mode. If the called terminal is in the privacy mode, it is determined that the position privacy precision corresponding to the calling terminal is the coarse precision or the virtual position precision, and the position information operation permission corresponding to the calling terminal is destroy after reading.

For example 9, the position privacy policy corresponding to the calling terminal is determined based on the timing at which the position information access request sent by the calling terminal is detected. If the timing, at which the position information access request sent by the calling terminal is detected, is non-working timing, it is determined that the position privacy precision corresponding to the calling terminal is the coarse precision or the virtual position precision, and the position information operation permission corresponding to the calling terminal is destroy after reading.

In some implementations, the security of the position information of the called terminal is further improved by defining different position privacy policies for different calling terminals.

In some implementations, if it is determined that the access permission of the calling terminal does not allow the calling terminal to access the position information of the called terminal, operation 101 (i.e., acquiring position information of the called terminal, and sending the position information to the calling terminal) is not to be executed; or, virtual position information of the called terminal may be acquired and sent to the calling terminal.

In some implementations, the virtual position information refers to position information that is set in advance or in real time and different from position information obtained by positioning.

In an implementation method of the video RBT applied to the called terminal, the position information of the called terminal is directly sent to the calling terminal instead of being sent to the RBT server to be transferred, so that the safety of the position information of the called terminal is improved.

In some implementations, the position information of the called terminal is sent to the calling terminal only in a case where the calling terminal has the access permission for accessing the position information of the called terminal, but not all calling terminals can obtain the position information of the called terminal, so that the safety of the position information of the called terminal is further improved.

Fig. 2 is a flowchart of a call processing method applied to a calling terminal in an embodiment of the present disclosure.

In a second aspect, referring to Fig. 2, an embodiment of the present disclosure provides a call processing method applied to a calling terminal, including following operations 200 to 202.

At operation 200, sending a call request to a called terminal, acquiring and playing a first video RBT without position information of the called terminal.

In some implementations, the call request may carry information of a user of the calling terminal, for example, workplace information of the user, number information of the user, or the like.

In some implementations, the first video RBT may be obtained from a RBT server.

In some implementations, after receiving the call request, information of an authentication at the network side for the calling terminal may be added into the call request, and then the call request is sent to the called terminal. For example, the information of the authentication at the network side for the calling terminal may be information representing that the calling terminal is authenticated as any one of a general number, an advertisement, a sales call, an intermediary, of the like.

In some implementations, after receiving the call request, information indicating whether the calling terminal passes the authentication at the network side may be added into the call request, and then the call request is sent to the called terminal.

In some implementations, the authentication at the network side for the calling terminal may be implemented by adopting Secure Telephone Identity Revisited (STIR) or Signature-based Handling of Assert information using toKENs (SHAKEN) caller ID authentication technology, or by using Client based Handling of Asserted information using crypto toKENs (CHAKEN) authentication technology.

In some implementations, a position of the first video RBT for displaying the position information of the called terminal is displayed as blank or as a preset icon, for example, an "envelope icon".

At operation 201, sending a position information access request to the called terminal.

In some implementations, the position information access request may be sent to the called terminal in a non-call state in which no call is ongoing (i.e., the call has not been answered), that is, in a process of playing the first video RBT; or the position information access request may be sent to the called terminal in a call state in which a call is ongoing (i.e., the call has been answered and is ongoing).

In some implementations, the position information access request may be sent to the called terminal in response to receiving a click instruction of a user on the position for displaying the position information of the called terminal.

In some implementations, the position information access request may be sent to the called terminal autonomously.

At operation 202, receiving the position information of the called terminal fed back by the called terminal, adding the position information of the called terminal into the first video RBT to form a second video RBT, and playing the second video RBT with the position information of the called terminal.

In some implementations, if the position information access request is sent to the called terminal in a non-call state, after receving the position information of the called terminal fed back by the called terminal, the position information of the called terminal is added into the first video RBT.

In some implementations, a position service may be called to display the position information of the called terminal on a map, and then in the first video RBT, based on the position information of the called terminal.

In some implementations, if the position information access request is sent to the called terminal in a call state, after receiving the position information of the called terminal fed back by the called terminal, operation 202 (i.e., adding the position information of the called terminal into the first video RBT to form a second video RBT, and playing the second video RBT with the position information of the called terminal) is replaced with: adding the position information of the called terminal onto the call display interface.

In some implementations, a position service may be called to display the position information of the called terminal on a map, and then on the call display interface, based on the position information of the called terminal.

In some implementations, receiving the position information of the called terminal fed back by the called terminal includes: receiving the position information of the called terminal and the corresponding position information operation permission fed back by the called terminal.

After receiving the position information of the called terminal fed back by the called terminal, the call processing method further includes: restricting an operation on the position information based on the position information operation permission.

In some implementations, restricting the operation on the position information based on the position information operation permission includes: restricting other operations than adding the position information into the first video RBT from being performed on the position information, or restricting other operations than adding the position information onto the call display interface from being performed on the position information, based on the position information operation permission. For example, if the position information operation permission is read only, the other operations than adding the position information into the first video RBT are restricted from being performed on the position information, or the other operations than adding the position information onto the call display interface are restricted from being performed on the position information.

In some implementations, restricting the operation on the position information based on the position information operation permission includes: based on the position information operation permission, restricting other operations than adding the position information into the first video RBT from being performed on the position information; or deleting the position information on the call display interface after the position information has been added onto the call display interface for a preset time, and restricting other operations than adding the position information onto the call display interface from being performed on the position information. For example, if the position information operation permission is destroy after reading, the position information in the second video RBT is to be deleted after the position information has been added into the first video RBT for the preset time; or the position information on the call display interface is to be deleted after the position information has been added onto the call display interface for the preset time. For another example, if the position information operation permission is destroy after reading, the position information in the second video RBT is to be deleted after the position information has been added into the first video RBT for the preset time, and other operations than adding the position information into the first video RBT are restricted from being performed on the position information; or the position information on the call display interface is to be deleted after the position information has been added onto the call display interface for the preset time, and other operations than adding the position information onto the call display interface are restricted from being performed on the position information.

In some implementations, the other operations than adding the position information into the first video RBT include: saving, forwarding, copying, pasting, screen capturing, screen recording, and the like.

In some implementations, the other operations than adding the position information onto the call display interface include: saving, forwarding, copying, pasting, screen capturing, screen recording, and the like.

In some implementations, by restricting the operation of the calling terminal on the position information through the position information operation permission, the safety of the position information of the called terminal is further improved.

In the call processing method applied to the calling terminal, the calling terminal obtains the first video RBT without the position information of the called terminal from the RBT server, and the calling terminal obtains the position information of the called terminal directly from the called terminal, instead of obtaining the position information of the called terminal from the RBT server, so that the safety of the position information of the called terminal is improved.

To more fully present a specific implementation process of the call processing method in the embodiment of the present disclosure, two examples are listed below for explanation, and the listed examples are not used to limit the scope of the embodiment of the present disclosure.

### Example 1

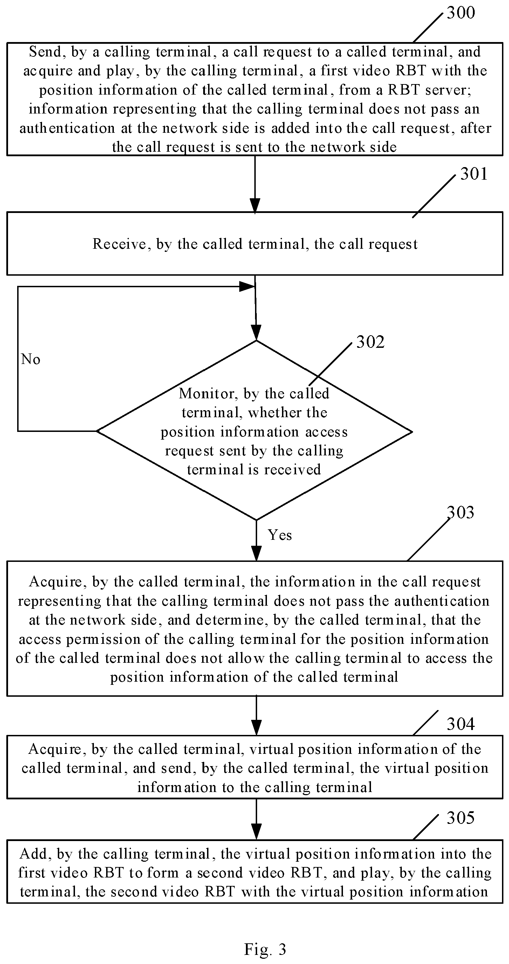

This example describes a call processing method which, as shown in Fig. 3, includes following operations 300 to 305.

At operation 300, sending, by a calling terminal, a call request to a called terminal, and acquiring and playing, by the calling terminal, a first video RBT without the position information of the called terminal from a RBT server; information representing that the calling terminal does not pass an authentication at the network side is added into the call request, after the call request is sent to the network side.

At operation 301, receiving, by the called terminal, the call request.

At operation 302, monitoring, by the called terminal, whether a position information access request sent by the calling terminal is received, if the position information access request sent by the calling terminal is received, operation 303 is to be executed, and if no position information access request sent by the calling terminal is received, whether the position information access request sent by the calling terminal is received is continuously monitored.

At operation 303, acquiring, by the called terminal, the information in the call request representing that the calling terminal does not pass the authentication at the network side, and determining, by the called terminal, that the access permission of the calling terminal for the position information of the called terminal does not allow the calling terminal to access the position information of the called terminal.

At operation 304, acquiring, by the called terminal, virtual position information of the called terminal, and sending, by the called terminal, the virtual position information to the calling terminal.

At step 305, adding, by the calling terminal, the virtual position information into the first video RBT to form a second video RBT, and playing, by the calling terminal, the second video RBT with the virtual position information.

### Example 2

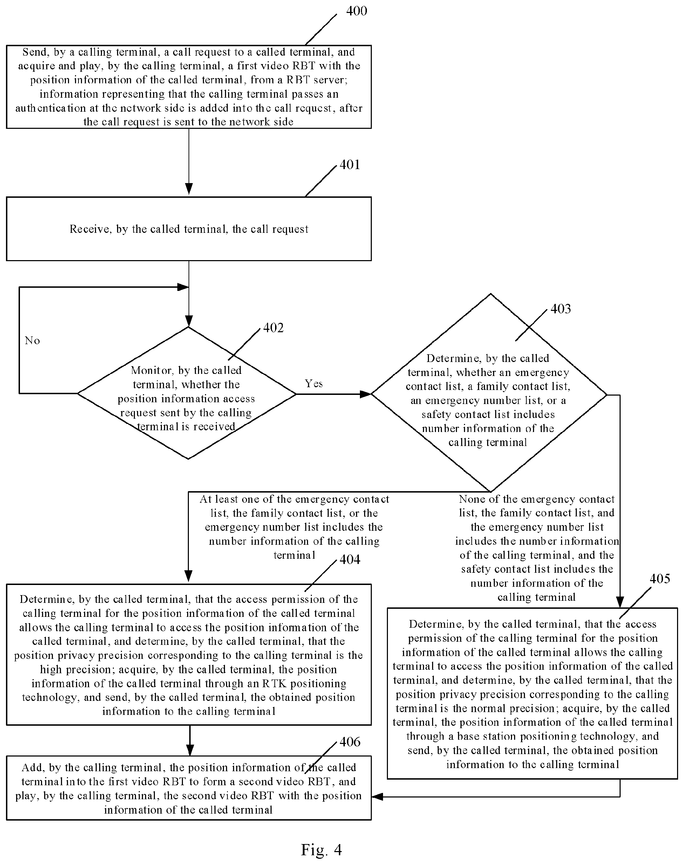

This example describes a call processing method which, as shown in Fig. 4, includes following operations 400 to 406.

At operation 400, sending, by a calling terminal, a call request to a called terminal, and acquiring and playing, by the calling terminal, a first video RBT without the position information of the called terminal from a RBT server; information representing that the calling terminal passes the authentication at the network side is added into the call request, after the call request is sent to the network side.

At operation 401, receiving, by the called terminal, the call request.

At operation 402, monitoring, by the called terminal, whether a position information access request sent by the calling terminal is received, if the position information access request sent by the calling terminal is received, operation 403 is to be executed, and if no position information access request sent by the calling terminal is received, whether the position information access request sent by the calling terminal is received is continuously monitored.

At step 403, determining, by the called terminal, whether an emergency contact list, a family contact list, an emergency number list, or a safety contact list includes number information of the calling terminal, if at least one of the emergency contact list, the family contact list, or the emergency number list includes the number information of the calling terminal, operation 404 and operation 406 are to be executed; if none of the emergency contact list, the family contact list, and the emergency number list includes the number information of the calling terminal, and the safety contact list includes the number information of the calling terminal, operation 405 and operation 406 are to be executed.

At step 404, determining, by the called terminal, that the access permission of the calling terminal for the position information of the called terminal allows the calling terminal to access the position information of the called terminal, and determining, by the called terminal, that the position privacy precision corresponding to the calling terminal is the high precision; acquiring, by the called terminal, the position information of the called terminal through an RTK positioning technology, and sending, by the called terminal, the obtained position information to the calling terminal.

At operation 405, determining, by the called terminal, that the access permission of the calling terminal for the position information of the called terminal allows the calling terminal to access the position information of the called terminal, and determining, by the called terminal, that the position privacy precision corresponding to the calling terminal is the normal precision; acquiring, by the called terminal, the position information of the called terminal through a base station positioning technology, and sending, by the called terminal, the obtained position information to the calling terminal.

At operation 406, adding, by the calling terminal, the position information of the called terminal into the first video RBT to form a second video RBT, and playing, by the calling terminal, the second video RBT with the position information of the called terminal.

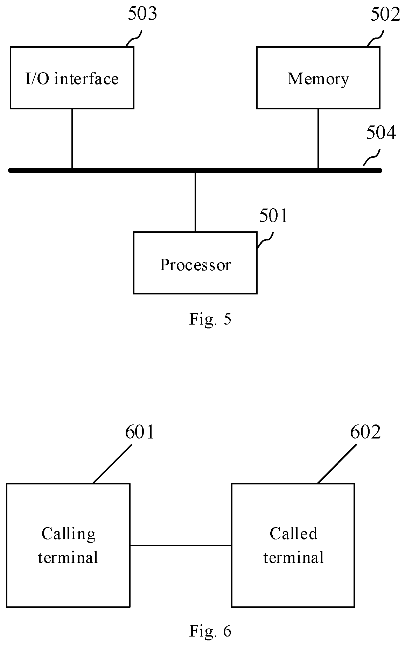

In a third aspect, referring to Fig. 5, an embodiment of the present disclosure provides an electronic device, including: at least one processor 501; and a memory 502 storing thereon at least one computer program which, when executed by the at least one processor 501, causes the at least one processor 501 to implement the call processing method described above.

In some implementations, the electronic device further includes: at least one I/O interface 503, which is connected between the processor 501 and the memory 502, and configured to implement information interaction between the processor 501 and the memory 502.

The processor 501 is a device having a capability of processing data, includes, but is not limited to, a Central Processing Unit (CPU), and the like; the memory 502 is a device having a capability of storing data, includes, but is not limited to, a random access memory (RAM, in particular, SDRAM, DDR, and the like), a read only memory (ROM), an electrically erasable programmable read only memory (EEPROM), and a FLASH; and the I/O interface 503 is connected between the processor 501 and the memory 502, and can implement information interaction between the processor 501 and the memory 502, and includes, but is not limited to, a data Bus, or the like.

In some implementations, the processor 501, the memory 502 and the I/O interface 503 are connected to each other via a bus 504, then connected to other components of the computing device via the bus.

In a fourth aspect, an embodiment of the present disclosure provides a computer-readable storage medium, storing thereon a computer-readable storage medium which, when executed by a processor, causes the processor to implement the call processing method described above.

Fig. 6 is a block diagram of a call processing system in an embodiment of the present disclosure.

In a fifth aspect, with reference to Fig. 6, an embodiment of the present disclosure provides a call processing system, including: a calling terminal 601 configured to send a call request to a called terminal, acquire and play a first video RBT without position information of the called terminal, send a position information access request to the called terminal, receive the position information of the called terminal fed back by the called terminal, add the position information of the called terminal into the first video RBT to form a second video RBT, and play the second video RBT with the position information of the called terminal; and a called terminal 602 configured to receive a call request of a calling terminal, monitor a position information access request sent by the calling terminal, and acquire position information of the called terminal, and send the obtained position information to the calling terminal, in response to the position information access request sent by the calling terminal being detected.

In some implementations, the called terminal 602 is further configured to, in response to the position information access request sent by the calling terminal being detected, determine an access permission of the calling terminal for the position information of the called terminal, and in response to determining that the access permission of the calling terminal allows the calling terminal to access the position information of the called terminal, acquire the position information of the called terminal and send the obtained position information to the calling terminal.

In some implementations, the called terminal 602 is further configured to send virtual position information to the calling terminal, in response to determining that the access permission of the calling terminal does not allow the calling terminal to access the position information of the called terminal.

In some implementations, the called terminal 602 is further configured to determine a position privacy policy corresponding to the calling terminal.

In some implementations, the position privacy policy includes position information operation permission configured to restrict an operation of the calling terminal on the position information; the called terminal 602 is configured to send the obtained position information to the calling terminal by sending the obtained position information and the corresponding position information operation permission to the calling terminal, the position information operation permission being configured to restrict the operation of the calling terminal on the position information.

The calling terminal 601 is further configured to receive the position information of the called terminal and the corresponding position information operation permission fed back by the called terminal, and restrict the operation on the position information based on the position information operation permission.

In some implementations, the position privacy policy includes position privacy precision; and the called terminal 602 is further configured to determine the position privacy precision corresponding to the calling terminal, and acquire the position information of the called terminal corresponding to the position privacy precision.

In some implementations, the calling terminal 601 is further configured to, in a call state, send a position information access request to the called terminal, and after receiving the position information of the called terminal fed back by the called terminal, replace the operation of adding the position information of the called terminal into the first video RBT to form the second video RBT and playing the second video RBT with the position information of the called terminal with adding the position information of the called terminal onto a call display interface.

The specific implementation process of the call processing system is the same as that of the call processing method described above, and thus is not repeated here.

It should be understood by those skilled in the art that all or some of the operations of the method, or the functional modules/components in the system and the apparatus, disclosed above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read only Memory (ROM), an Electrically Erasable Programmable Read only Memory (EEPROM), a flash memory or other memory techniques, a Compact Disc Read only Memory (CD-ROM), a Digital Video Disk (DVD) or other optical disc storages, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

Part of the exemplary embodiments are disclosed herein, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A call processing method, applied to a called terminal, comprising:
receiving a call request of a calling terminal, and monitoring a position information access request sent by the calling terminal; and
acquiring position information of the called terminal and sending the position information to the calling terminal, in response to the position information access request sent by the calling terminal being detected.

2. The call processing method according to claim 1, further comprising:
in response to the position information access request sent by the calling terminal being detected, determining an access permission of the calling terminal for the position information of the called terminal, before acquiring the position information of the called terminal; and
in response to determining that the access permission of the calling terminal allows the calling terminal to access the position information of the called terminal, continuing to acquire the position information of the called terminal.

3. The call processing method according to claim 2, further comprising:
sending virtual position information to the calling terminal, in response to determining that the access permission of the calling terminal does not allow the calling terminal to access the position information of the called terminal.

4. The call processing method according to claim 2, further comprising:
in response to determining that the access permission of the calling terminal allows the calling terminal to access the position information of the called terminal, determining a position privacy policy corresponding to the calling terminal, before acquiring the position information of the called terminal.

5. The call processing method according to claim 4, wherein the position privacy policy comprises position information operation permission, configured to restrict an operation of the calling terminal on the position information; and
the sending the position information to the calling terminal comprises:
sending the position information and the position information operation permission to the calling terminal.

6. The call processing method according to claim 4, wherein the determining the position privacy policy corresponding to the calling terminal comprises:
determining the position privacy policy corresponding to the calling terminal based on at least one of:
a user group to which number information of the calling terminal belongs;
an authentication result at a network side for the calling terminal;
whether the calling terminal is granted with the access permission for accessing the position information during a historical call;
whether an instruction of granting the access permission for accessign the position information of the called terminal to the calling terminal is received;
whether a position of the called terminal belongs to a preset sensitive place;
whether the called terminal is in a privacy mode; or
timing at which the position information access request sent by the calling terminal is detected.

7. The call processing method according to claim 4, wherein the position privacy policy comprises a position privacy precision; and
the acquiring the position information of the called terminal comprises:
acquiring the position information of the called terminal corresponding to the position privacy precision.

8. The call processing method according to claim 7, wherein the position privacy precision comprises at least one of: high precision, normal precision, coarse precision, or virtual position precision.

9. The call processing method according to any one of claims 2 to 8, wherein the determining the access permission of the calling terminal for the position information of the called terminal comprises:
determining the access permission of the calling terminal for the position information of the called terminal based on at least one of:
a user group to which number information of the calling terminal belongs;
an authentication result at a network side for the calling terminal;
whether the calling terminal is granted with the access permission for accessing the position information during a historical call; or
whether an instruction of granting the access permission for accessing the position information of the called terminal to the calling terminal is received.

10. A call processing method, applied to a calling terminal, comprising:
sending a call request to a called terminal, acquiring and playing a first video RBT without position information of the called terminal;
sending a position information access request to the called terminal; and
receiving the position information of the called terminal fed back by the called terminal, adding the position information of the called terminal into the first video RBT to form a second video RBT, and playing the second video RBT with the position information of the called terminal.

11. The call processing method according to claim 10, wherein the receiving the position information of the called terminal fed back by the called terminal comprises: receiving the position information of the called terminal and a position information operation permission corresponding to the position information fed back by the called terminal; and
after receiving the position information of the called terminal fed back by the called terminal, the method further comprises:
restricting an operation on the position information based on the position information operation permission.

12. The call processing method according to claim 11, wherein the restricting the operation on the position information based on the position information operation permission comprises:
restricting other operations than adding the position information into the first video RBT from being performed on the position information, based on the position information operation permission.

13. The call processing method according to claim 11, wherein the restricting the operation on the position information based on the position information operation permission comprises:
deleting the position information in the second video RBT after the position information has been added into the first video RBT for a preset time, based on the position information operation permission.

14. The call processing method according to any one of claims 10 to 13, wherein the sending the position information access request to the called terminal comprises:
sending the position information access request to the called terminal in a call state; and
after receiving the position information of the called terminal fed back by the called terminal, the adding the position information of the called terminal into the first video RBT and playing the second video RBT with the position information of the called terminal, is replaced by adding the position information of the called terminal onto a call display interface.

15. An electronic device, comprising:
at least one processor; and
a memory, storing thereon at least one computer program which, when executed by the at least one processor, causes the at least one processor to implement the call processing method of any one of claims 1 to 14.

16. A computer-readable storage medium, storing thereon a computer program which, when executed by a processor, causes the processor to implement the call processing method of any one of claims 1 to 14.
